(19) Europäisches Patentamt

European Patent Office

Office européen des brevets

(11) **EP 1 081 645 A1**

(12) **EUROPEAN PATENT APPLICATION**
published in accordance with Art. 158(3) EPC

(43) Date of publication:
07.03.2001 Bulletin 2001/10

(51) Int. Cl.[7]: **G06T 1/00**, G09B 29/00

(21) Application number: 00911307.7

(86) International application number:
**PCT/JP00/01776**

(22) Date of filing: 23.03.2000

(87) International publication number:
**WO 00/57357 (28.09.2000 Gazette 2000/39)**

(84) Designated Contracting States:
**AT BE CH CY DE DK ES FI FR GB GR IE IT LI LU MC NL PT SE**

(30) Priority: 24.03.1999 JP 8052699

(71) Applicant:
**TOYOTA JIDOSHA KABUSHIKI KAISHA Aichi-ken 471-8571 (JP)**

(72) Inventor:
**TANAKA, Isahiko
Toyota Jidosha Kabushiki Kaisha
Toyota-shi, Aichi 471-8571 (JP)**

(74) Representative:
**Leson, Thomas Johannes Alois, Dipl.-Ing. et al
Patentanwälte
Tiedtke-Bühling-Kinne & Partner,
Bavariaring 4
80336 München (DE)**

(54) **METHOD AND DEVICE FOR MAKING MAP USING PHOTOGRAPH IMAGE AND METHOD FOR CORRECTING DISTORTION OF PHOTOGRAPH IMAGE**

(57) There is provided a method for obtaining a map drawing image with high resolution and without distortion. The ground surface is imaged from an airplane (S10), so that an aerial image is obtained (S12). Meanwhile, the same ground surface is also imaged from a satellite (S20), so that a satellite image is obtained (S22). While aerial images have very high resolution, satellite images have an extremely small amount of distortion. With geometric correction using the satellite images, distortion of the aerial images is removed (S34). Making best use of the advantages of both aerial and satellite images, images with high resolution and without distortion can be obtained. Using such an image, a highly accurate map can be made (S42).

Fig. 1

EP 1 081 645 A1

**Description**

TECHNICAL FIELD

The present invention relates to a map drawing method and device using an image captured at a point high above the ground, and in particular to distortion correction for such an image.

BACKGROUND ART

In recent years, digital maps based on digital data have come to find a wider use, with a typical example of the use being for vehicle navigation devices. Various navigation systems with highly sophisticated functions have been proposed. For example, a system which notifies a driver of an approaching curve or a lane to drive has been proposed as have vehicle control according to gradient or curvature through application of navigation technique and new ITS (Intelligent Transport Systems)-related functions. To realize these higher functions, provision of frequently updated, highly accurate maps is desired.

Use of aerial images for map drawing is known. Aerial photography is advantageous in that high resolution images of a ground surface can be provided. Aerial imaging is, however, disadvantageous that a view angle is relatively wide and that the images are distorted in areas away from the center of the image. For this reason, shapes of roads and so on cannot be precisely determined from aerial images though captured with a high resolution. Therefore, distortion in aerial images should be corrected before the images are used for map drawing.

In one distortion correction method, an amount of error which causes distortion is estimated, and an image is corrected based on the estimated error amount. However, distortion removal with high accuracy, compatible with the high resolution of aerial images, can be hardly achievable.

Japanese Patent Laid-Open No. Hei 5-165402 proposes distortion correction for aerial images by using a map of a captured region. Affine conversion, rotation, and so on are applied to coincide the image with the map. By application of such techniques, distortion in a captured image can be removed, using an extent map as a reference. This process, however, cannot correct distortion, based on the current state of geography, roads, buildings, and so on, as a map made in the past is referred to.

The present invention has been conceived in view of the above, and aims to achieve accurate correction of distortion in a map drawing image, based on real-time state of the ground.

DISCLOSURE OF INVENTION

In order to achieve the above object, according to the present invention, a map drawing image, which is captured at a first height, and a distortion correction image, which is captured at a second height, higher than the first height, are obtained. Then, distortion of the map drawing image is corrected using the distortion correction image, and a map is drawn based on the corrected map drawing image. The first height is set at a height such as to provide an image having a resolution as required for map drawing. The second height is set at a height such as to provide an image having an amount of distortion sufficiently small that the map can be used as a basis for distortion correction.

Preferably, the map drawing image is an aerial image, and the distortion correction image is a satellite image. That is, the first height is a height of an airplane path, while the second height is a height of an artificial satellite orbit.

Aerial images, captured at a relatively low altitude, are of high resolution, but contain an increasing amount of distortion farther away from their centers. Meanwhile, satellite images, captured at a high altitude, are of lower resolution, but have very little distortion. Thus, correcting high resolution aerial images using low distortion satellite images can produce high resolution images with a small amount of distortion. Highly accurate maps can be produced using such images. Because according to the present invention correction is made based on the current state of roads, buildings, and so on, rather than based on a dated map as a reference, accurate correction unhampered by changes in road, buildings, and other conditions can be achieved.

It should be noted that map drawing and distortion correction images are not limited to aerial and satellite images, respectively. The relative imaging heights of these two example images differ significantly. As long as this condition is met, map drawing and distortion correction images may, for example, both be aerial images captured at relatively different heights. When setting an imaging height at which to capture a distortion correction image, any height at which an image having distortion small enough to be useful for distortion correction can be set. That is, in consideration of the property that distortion decreases as imaging height increases, distortion correction images should be captured at such a height that a resulting image will have distortion of an amount equal to or less than a distortion correction target.

Preferably, the map drawing image is corrected through geometric correction. Use of geometric correction attains more reliable distortion correction.

Preferably, a blank area behind a solid object caused as a result of correcting the inclination of the solid object in a map drawing picture is complimented using a corresponding portion of the distortion correction image. When photographing at a low height, areas behind solid bodies are not captured, resulting in blank areas in a corrected image. According to the present invention, this is complimented using a corresponding part in the distortion correction image. Thus, information necessary for map drawing can be reliably obtained for the entirety of the captured region.

According to another aspect of the present invention, there is provided a method for correcting distortion in an image of the ground captured from high above the ground. This method comprises (i) a step of obtaining a first image captured at a first height, (ii) a step of obtaining a second image captured at a second height, higher than the first height, and (iii) a step of correcting distortion in the first image using the second image. The first height is set at such a height as to provide an image having a resolution sufficient to correct an image. The second height is set at such a height as to provide an image having distortion sufficiently small to be used as a basis for distortion correction. As described above, the present invention can be applied to a use other than map drawing, such as, for example, an aerial image providing service.

BRIEF DESCRIPTION OF DRAWINGS

   Fig. 1 is a flowchart showing a map drawing method according to a preferred embodiment of the present invention;
   Fig. 2 is a diagram showing horizontal distortion of an air photo;
   Fig. 3 is a diagram showing distortion due to inclination of a solid body shown in an air photo;
   Fig. 4 is a diagram showing an example of geometric distortion correction;
   Fig. 5 is a diagram showing image compensating processing after distortion correction;
   Fig. 6 is a diagram showing a map drawing device based on the preferred embodiment of the present invention; and
   Fig. 7 is a diagram showing an orthochromatic image.

BEST MODE FOR CARRYING OUT THE INVENTION

In the following, a preferred embodiment of the present invention will be described with reference to the accompanying drawings.

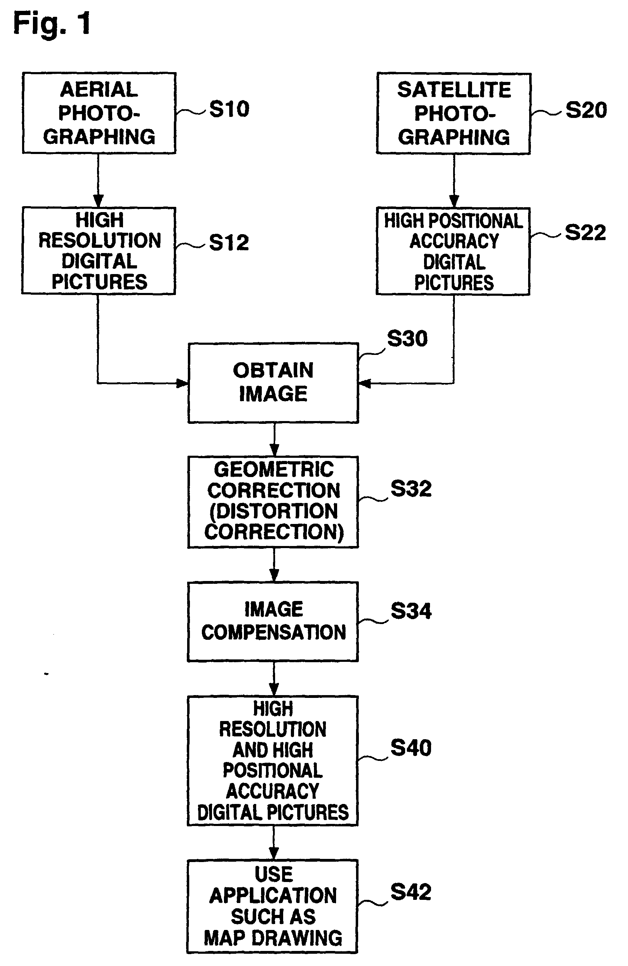

Fig. 1 illustrates a map drawing method according to the present invention. Generally, aerial images are captured from an airplane (S10), so that high resolution digital images can be obtained (S12). Meanwhile, satellite images are captured by artificial satellite (S20), so that digital images with high positional accuracy, i.e., pictures with substantially no distortion, can be obtained (S22). These images are supplied to an image processor for map drawing via communication and other methods (S30). The aerial images are then subjected to geometric correction at S32, where distortion in the images is corrected, and also to image compensating processing (described later) at S34. As a result, an image with high resolution and high positional accuracy (less distorted) can be obtained (S40), and a map is drawn using the resulting image.

Aerial image Characteristics

Because aerial images are captured at a relatively low height, high resolutions up to, e.g., 5 to 30 cm are achievable. However, the wide view angle of such images causes there to be a larger amount of distortion in an image when going away from the center to the periphery thereof.

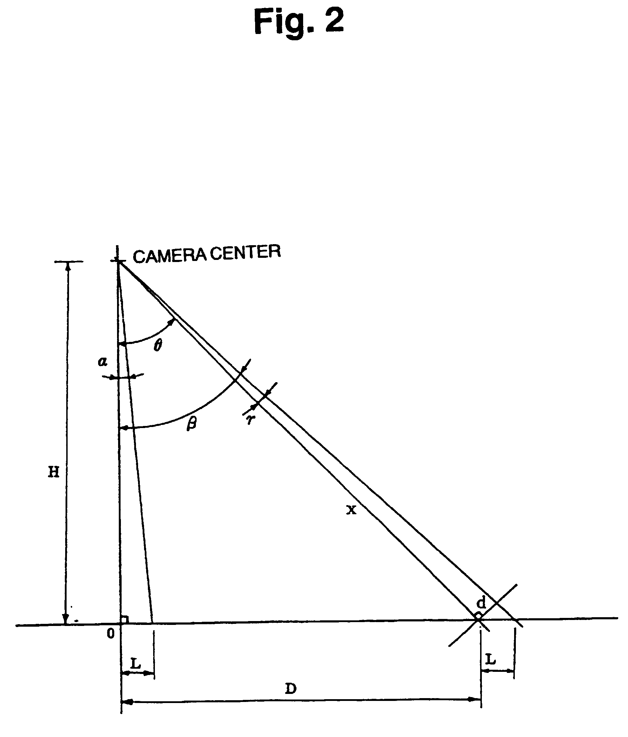

Fig. 2 illustrates the property that the apparent length of an object (in the horizontal direction) differs from its actual length anywhere other than in the center of the image. H refers to the imaging height (the center of a camera), O refers to a point directly below the camera, L refers to the length of an object, and D refers to a swing distance (the distance from the imaging center to an object). Assume that H=3000 m and L=100 m.
For an object located directly below the camera, the apparent length of the object is 100 m, which is equal to its actual length. However, with D=300 m, i.e., when the object is located 300 m away from the imaging center, the apparent length of the object, d, is 99.2 m. The difference between the apparent length d and the actual length L leads to image distortion. Farther away from the center, the apparent length d is shorter and the distortion is larger.
In Fig. 2, with D=400 m, the apparent length d is 98.7 m. In this view, when an error within 1 m is desired and the imaging height is 3000 m, only a region of about ±300 m from the center of the image can be usable.
As for other marks in Fig. 2, $\alpha$ is an observation angle of an object, $\theta$ is a swing angle, $\beta$ is a maximum elevation angle, $\gamma$ (= $\beta$-$\theta$) is far viewpoint view angle, X is a swing distance (a distance from a camera center to an object). With D=0 (directly below the camera), $\alpha$=$\beta$=$\gamma$=1.91° , $\theta$=0° , X=3000 m. With D=300m, $\theta$=5.71° , $\beta$=7.59° , $\gamma$=1.88° , X=3014.96m. In this case, an error magnification (d/L) is 0.992.

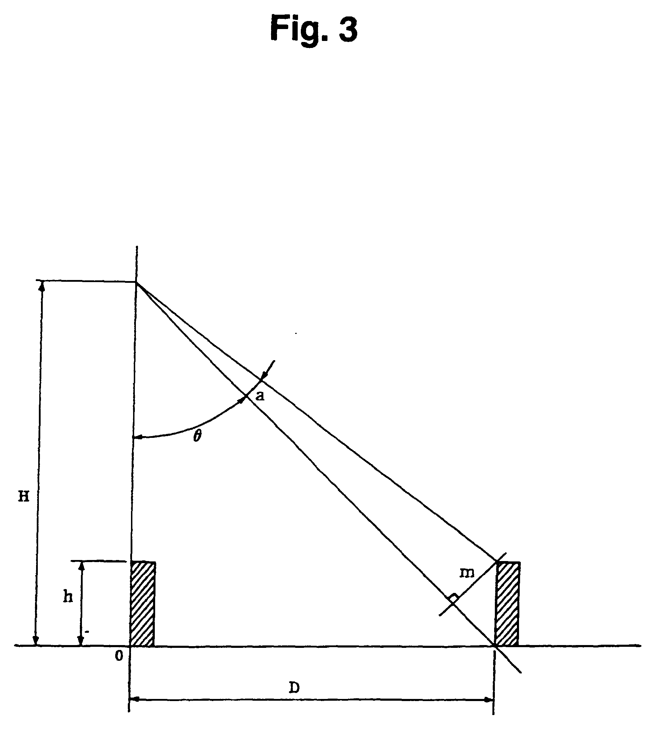

Fig. 3 shows an example where a solid body, such as a building, appears to tilt, depending on its position in the image. H refers to an imaging height (the center of a camera), h is the height of a building. With H=3000 m and h=30 m, at a point with D=500 m and $\theta$=9.46° , i.e., a point 500 m away from the point directly below the camera, an inclination amount m is 4.93 m. That is, a building of 30 m tall appears to be inclining by 4.93 m. The inclination angle a is 9.34° .
As described above, as aerial images contain a large amount of distortion, only a small section at and around the center of the image can be usable for map drawing. Map drawing without distortion correction requires a very large number of overlapping pictures, which greatly increases map drawing costs. Distortion correction is desirable so that a larger portion of images can be used for map drawing.

Distortion correction can be made based on an estimated error amount. However, estimation of an error amount with high accuracy compatible with the high resolution of aerial images can not be readily achieved, and best use of the advantage of aerial images, i.e., high resolution, can not be made. The present invention has been conceived in light of the above, and aims to provide a method for attaining highly accurate distortion correction.

Satellite Image Characteristics

The height at which satellite images are captured is significantly higher than that for aerial images. As a result, problems with aerial images, such as horizontal error and inclination of buildings, are not problems for satellite images. Satellite images contain almost no distortion, and can provide highly accurate positional information on an object.

In Fig. 2, providing that the height H of satellite imaging is 680 km, the error with an object with L=100 m, located at a point D=3000 m, or a point away from the imaging center by 3 km, is about 0.1 cm. In addition, the inclination m of the building in Fig. 3 is about 13 cm. Assuming that the resolution is 1 m, positional accuracy significantly surpassing the resolution can be obtained.

Geometric Correction (Distortion Correction)

Geometric correction is the removal of distortion from an image containing geometric distortion. Positional accuracy of satellite images is very high, as described above. Using the positional information obtained from a satellite image, the position of an object shown in an aerial image is corrected, and inclination of solid objects, such as buildings, is removed. As a result, distortion can be removed from aerial images.

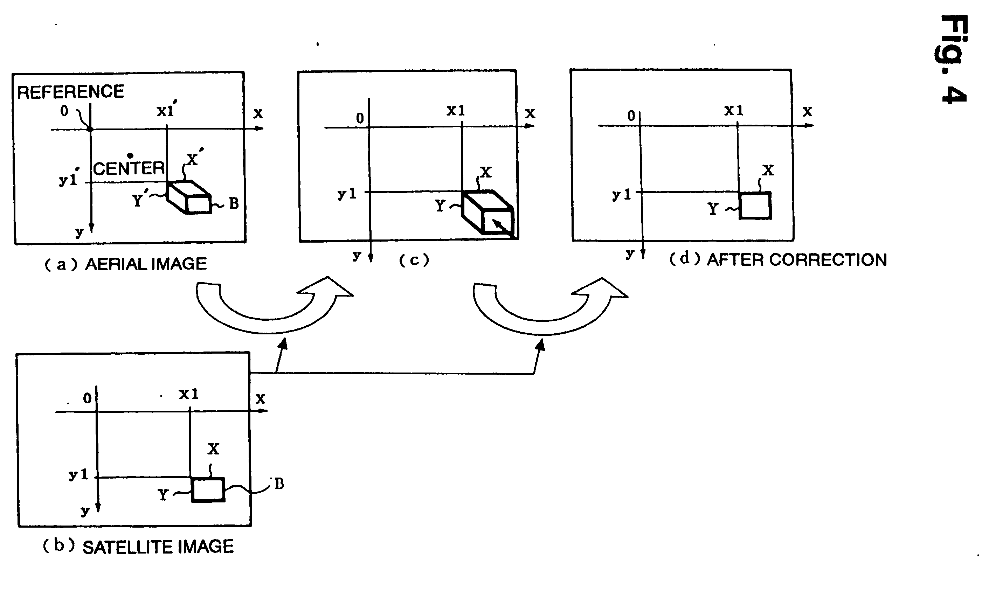

Figs. 4(a) to 4(d) schematically show a specific example of geometric correction in the preferred embodiment. A reference point O may be, for example, a triangulation point set on the ground or a characteristic point, such as a corner of a large building. The building B is shown away from the center of the image. Respective imaging ranges for aerial and satellite imaging are determined including the reference point O, and XY coordinates are set including the reference point O as a reference point.

Fig. 4(a) is an aerial photograph, in which coordinates of the corner of the building B are (x1', y1'), and the vertical and horizontal widths are X' and Y', respectively. These figures contain errors according to geometric distortion.

Fig. 4(b), on the other hand, is a satellite image, in which coordinates of the corner of the building B are (x1, y1), and the widths of the building are X and Y. These values contain substantially no distortion because distortion in satellite images is small.

In Fig. 4(c), an error in a horizontal distance in the aerial image is corrected. Specifically, the building B is moved such that the coordinates of the corner thereof coincide with those of the satellite image. In addition, the width of the building B is corrected to be equal to that in the satellite image.

In Fig. 4(d), inclination of the building in the aerial image is corrected. Specifically, the rooftop of the building B is moved to an appropriate position, i.e., the position of the building B on the ground surface in this case.

By the above process, distortion due to the building B located away from the imaging center is corrected. This processing is applied to the entire captured image so that solid bodies other than buildings can be similarly processed. As a result, a high resolution picture free from distortion can be obtained.

The above described geometric correction can be carried out as follows. A plurality of representative points are set in the image. A horizontal distance is corrected for each representative point so that a correction value is obtained. The correction value may be, for example, correction widths in X and Y directions or a correction direction and distance (a vector). Based on the correction values of these multiple representative points, correction values for any points other than representative points are obtained by means of a linear method. Specifically, a correction value for an intermediate point between two representative points is determined as the average of the correction values of these representative points. Meanwhile, inclination is corrected for every solid body by an operator.

Alternatively, inclination may be corrected as follows. That is, because the altitude of each point in an image can be found using orthochromatic images (described later), the height of a solid body can be known. Then, inclination in appearance of a building is calculated according to Fig. 3. An inclination direction is a radial direction originated from the center of an image. Based on the inclination amount and direction, the rooftop of the building is detected, and moved to an appropriate position, specifically, in a direction opposite from the inclination direction by the inclination amount. In this way, inclination of the building is corrected. This processing is also applied to solid objects other than buildings.

In geometric correction, respective points in the image before correction are projected onto an image after correction. That is, a position corresponding to each pixel in the input image is found in the image after the correction, and a pixel value of the pixel in the input image is imparted to that found position. However, as the obtained position does not coincide with a grid point (a point with a pixel) in the image after the correction, a pixel value for the grid point is obtained through interpolation.

To the contrary, respective points in an image after the correction may be projected to the image before the correction. That is, a position corresponding to each pixel in the output image is found in the image before correction. Again, the calculated position generally does not coincide with a grid point (a point with a pixel). Thus, a pixel value for the obtained position is obtained based on the surrounding pixels. The obtained pixel value is used as pixel data for the image after the correction.

The above described interpolation may be either, e.g., (i) nearest interpolation: use of a pixel value of the nearest pixel; (ii) co-linear interpolation: interpolation by means of a linear method using pixel values at four points around; or (iii) tertiary convolution interpolation: interpolation by means of a tertiary convolution function using pixel values at sixteen points around.

Alternatively, distortion correction in this embodiment may be carried out for every sector resulting by dividing an aerial image. In such a case, a reference point is set in each sector, and a horizontal distance from the reference point is corrected.

Background Image Compensation

As described referring to Fig. 3, in aerial images, a solid body may appear to be inclining. Therefore, an area behind a solid body is not shown in the images. After inclination of a solid body is corrected by means of geometric correction, the area behind the solid body is left blank, resulting in a section with no image. In this embodiment, such blank portions are complimented as described below so that a complete image is obtained.

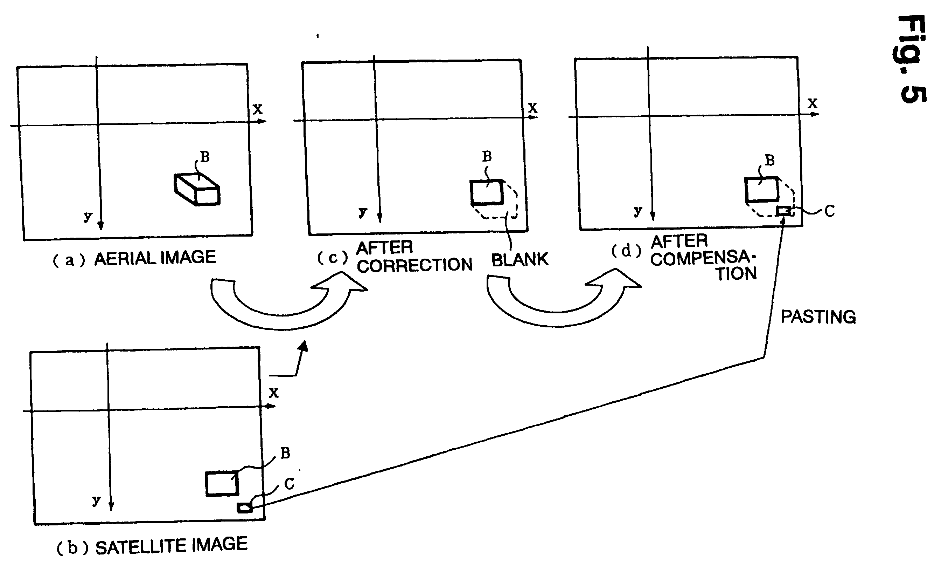

Figs. 5(a) to (d) show an example of compensating processing. Fig. 5(a) is an aerial image with an inclining building B. Fig. 5(b) is a satellite image showing the building B not inclining. As shown in the satellite image, a smaller building C exists next to the building B. In the aerial image, the building C is hidden by the building B.

In Fig. 5(c), distortion is corrected using the method described with reference to Fig. 4. As a result of the correction of the inclination of the building B, i.e., moving the rooftop of the building B, a blank area is created behind the building B. In actuality, the building C exists in this blank, however, the building C is not shown in the corrected image because it is not shown in the original aerial image.

In Fig. 5(d), the blank area is compensated for using a satellite image. Specifically, an image area corresponding to the blank area is copied from the satellite image and pasted to the aerial image. The image of the building C is also pasted on the aerial image. Although resolution may be degraded due to the pasted satellite image, the blank area is avoided.

As described above, according to the present invention, a complete image without blank areas can be obtained. Therefore, information necessary for map drawing can be obtained for the entirety of the image, so that an accurate map can be drawn.

Map Drawing

Returning to Fig. 1, as a result of geometric correction and image compensation, an image with high resolution and high positional accuracy can be obtained (S40). This image simultaneously has the advantages of aerial images, i.e., high resolution, and of satellite images, i.e., small distortion. Map drawing is applied using this image (S42). As a result, a highly accurate map can be obtained.

Map drawing in the present invention includes drawing of new maps and updating of extent maps. For updating, for example, the image obtained at S42 is compared with an existing map, and the map is modified such that changes are reflected.

In addition, the image obtained at S40 may be usable for application other than map drawing, such as, for example, an aerial image providing service. Distortion correction according to the present invention is not limited to map drawing.

Map Drawing Device

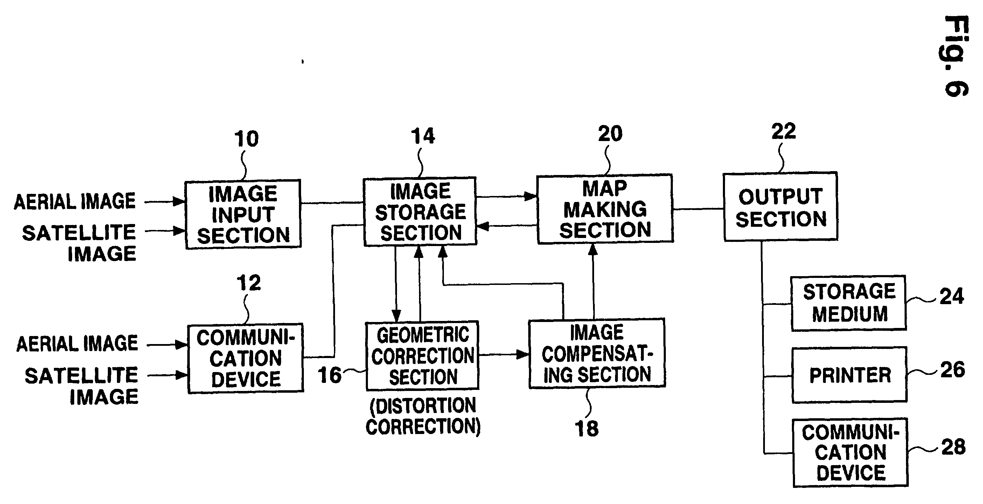

Referring next to Fig. 6, an example structure of a map drawing device preferable for the above described distortion correction will be described. Aerial and satellite images are input to an image input section 10. Digital image data may be input, or an image may be read by a scanner or the like and converted into digital data. Aerial images and satellite images may be obtained via a communication device 12. Analogue data may be received and converted into digital image data, or data may be received as digital image data. The image input section 10 and the communication device 12 serve as image obtaining means.

Preferably, a receiver section on the ground sends imaging instructions to an artificial satellite. In response to the imaging instructions, the artificial satellite captures images at a predetermined position at a predetermined time, and then transmits image data to the receiver station. The image data is then sent from the receiver station to a map drawing center.

The obtained image is temporarily stored in an image storage section 14, which conceptually contains all image processor memories, i.e., RAM, hard disks, and so on.

Aerial images and satellite images stored in the storage section 14 are read by a geometric correction section 16, and then subjected to geometric correction as described earlier. That is, distortion in the aerial images is corrected using distortion-free satellite images as a reference. The corrected images further undergo compensation processing by the image compensation section 18.

The complimented image is returned to the storage section 14, and then read by a map drawing section 20. Alternatively, the image may be supplied directly to the map drawing section 20. The map drawing section 20 draws a map using the corrected image. The map drawing section 20 may have a known image processing function for drawing a map based on captured images through image processing.

The complete map is stored in the storage section 14, and also output from the output section 22. The output data is stored in, for example, a recording medium 24, or printed on a printer 26. Alternatively, the output data may be sent to the communication device 28 for use by outside map users.

Maps drawn according to the present invention may be used in, for example, a vehicle-mounted navigation device. Such a map is usable in all fields related to ITS (Intelligent Transport Systems) technology for making highly functionable vehicles. Further, such a map can be preferably used in all GIF (Geographic Information System)-related fields.

Orthochromatic Image

In this embodiment, preferably, orthochromatic image processing is applied to satellite images, and distortion in aerial images is corrected using the resulting orthochromatic satellite images.

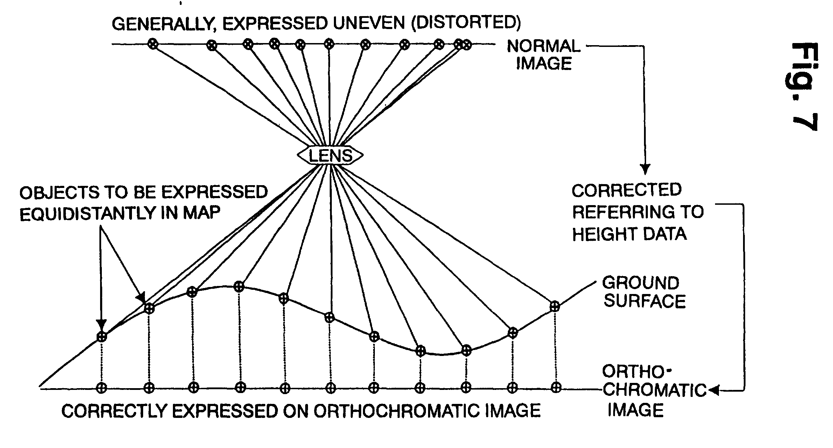

Fig. 7 illustrates the principle of orthochromatic image processing. In orthochromatic image processing, satellite images of a region, taken from a plurality of different angles, are processed to obtain an image of the ground surface viewed from substantially directly above the ground. With this processing, altitude information for the respective points can be obtained by means of triangulation or the like, and top images can be generated using the altitude information.

Distortion in satellite images is originally very small, as described above. Even this small amount of distortion can be further corrected using orthochromatic image processing. As a result, images with extremely high positional accuracy can be obtained. By using such orthochromatic images as a reference, distortion correction accuracy and, thus, map accuracy can be further improved.

In orthochromatic image processing, altitude information for each point in an image can be obtained. The altitude information can be preferably used in 3D-map drawing.

Aspects of a referred embodiment of the present invention have been described. According to the present invention, aerial images, which are of high resolution but which show increasing distortion away from their centers, are corrected using satellite images, which generally have lower resolution but which contain no distortion. By taking advantages with an image of high resolution and no distortion, an image with high resolution and no significant distortion can be obtained.

As a result, map drawing with very high accuracy can be achieved. Moreover, aerial images free from distortion can be provided for uses other than map drawing.

Further, correction of aerial images is carried out based on satellite images captured fairly close in time to the aerial images. This is preferable because correction can be made using information on buildings, roads, and so on, obtained close in time to when the aerial images are captured, instead of using dated information.

Aerial imaging requires pre-flight scheduling and images cannot be taken whenever desired. Meanwhile, satellite images can be obtained quite often (e.g., once every three days). Therefore, the time for satellite imaging can be easily set as the time for aerial imaging. Use of satellite images is also preferable in this view.

Although, in the above description, a map drawing picture is an aerial image and a distortion correction picture is a satellite image, the present invention is not limited to this configuration. The important is that the imaging height for a distortion correction image is high enough to provide an image having distortion which is sufficiently small in view of the accuracy required in distortion correction. A map drawing image and a distortion correction image may both be aerial images or satellite images.

However, the above embodiment, in which aerial images are used for one purpose and satellite images are used for the other purpose, is advantageous because imaging heights for two images are resultantly widely set so that an image with high resolution is corrected using an image with high positional accuracy. As a result, an image having both advantages can be obtained.

INDUSTRIAL APPLICABILITY

As described above, the present invention can be usable at least in navigation and other devices, and or as a technology for preparing maps for other use.

**Claims**

1. A map drawing method for drawing a map using an image of a ground captured from high above the ground, comprising the steps of:

    obtaining a map drawing image captured at a first height;
    obtaining a distortion correction image captured at a second height, higher than the first height;
    correcting distortion of the map drawing image using the distortion correction image; and
    drawing a map based on the map drawing image corrected;
    wherein
    the first height is set at such a height as to provide an image having resolution appropriate for map drawing, and

the second height is set at a height as to provide an image having a sufficiently small amount of distortion as required for the image to be used as a basis for distortion correction.

2. A map drawing method according to claim 1, wherein the map drawing image is an aerial image, and the distortion correction image is a satellite image.

3. A map drawing method according to any one of claim 1 and claim 2, wherein the map drawing image is corrected through geometric correction.

4. A map drawing method according to any one of claim 1 and claim 2, further comprising the step of compensating for a blank area behind a solid object, caused as a result of correcting inclination of the solid image in the map drawing image, using a corresponding area of the distortion correction image.

5. A map drawing device for drawing a map using an image of a ground captured from high above the ground, comprising:

an image storage section for storing a map drawing image captured at a first height, and a distortion correction image captured at a second height, higher than the first height; and a map correction section for correcting distortion of the map drawing image using the distortion correction image; and a map drawing section for drawing a map based on the map drawing image corrected; wherein the first height is set at such a height as to provide an image having resolution appropriate for map drawing, and the second height is set at such a height as to provide an image having a sufficiently small amount of distortion as required for the image to be used as a basis for distortion correction.

6. A map drawing device according to claim 5, wherein the map drawing image is an aerial image, and the distortion correction image is a satellite image.

7. A map drawing device according to any one of claim 5 and claim 6, wherein the map drawing image is corrected through geometric correction.

8. A map drawing device according to any one of claim 5 and claim 6, wherein a blank area behind a solid object, caused as a result of correcting inclination of the solid image in the map drawing image, is compensated for using a corresponding area of the distortion correction image.

9. A distortion correction method for correcting distortion in an image captured from high above a ground, comprising the steps of:

obtaining a first image captured at a first height; obtaining a second image captured at a second height, higher than the first height; and correcting distortion of the first image using the second image; wherein the first height is set at such a height as to provide an image having resolution required for an image with distortion corrected, and the second height is set at a height such as to provide an image having a sufficiently small amount of distortion as required for the image to be used as a basis for distortion correction.

# Fig. 1

```
┌─────────────────┐              ┌─────────────────┐
│    AERIAL        │              │   SATELLITE     │
│    PHOTO-        │ ～S10        │    PHOTO-        │ ～S20
│  GRAPHING        │              │  GRAPHING       │
└─────────────────┘              └─────────────────┘
         │                                │
         ▼                                ▼
┌─────────────────┐              ┌─────────────────┐
│     HIGH         │              │ HIGH POSITIONAL │
│  RESOLUTION      │ ～S12        │   ACCURACY      │ ～S22
│   DIGITAL        │              │   DIGITAL       │
│  PICTURES        │              │  PICTURES       │
└─────────────────┘              └─────────────────┘
         │                                │
         │        ┌───────────┐  S30      │
         │        │  OBTAIN    │ ⌐         │
         └───────▶│  IMAGE     │◀──────────┘
                  └───────────┘
                        │
                        ▼
                  ┌───────────┐
                  │ GEOMETRIC  │
                  │ CORRECTION │  S32
                  │(DISTORTION│
                  │CORRECTION) │
                  └───────────┘
                        │
                        ▼
                  ┌───────────┐
                  │   IMAGE    │  S34
                  │COMPENSATION│
                  └───────────┘
                        │
                        ▼
                  ┌───────────┐
                  │   HIGH     │
                  │ RESOLUTION │
                  │  AND HIGH  │
                  │ POSITIONAL │  S40
                  │  ACCURACY  │
                  │DIGITAL PICTURES│
                  └───────────┘
                        │
                        ▼
                  ┌───────────┐
                  │    USE     │
                  │APPLICATION │
                  │  SUCH AS   │  S42
                  │MAP DRAWING │
                  └───────────┘
```

# Fig. 2

# Fig. 3

# Fig. 4

(a) AERIAL IMAGE

(b) SATELLITE IMAGE

(c)

(d) AFTER CORRECTION

EP 1 081 645 A1

# Fig. 5

(a) AERIAL IMAGE

(b) SATELLITE IMAGE

(c) AFTER CORRECTION

(d) AFTER COMPENSATION

BLANK

PASTING

**Fig. 6**

Fig. 7

GENERALLY, EXPRESSED UNEVEN (DISTORTED)

NORMAL IMAGE

LENS

OBJECTS TO BE EXPRESSED EQUIDISTANTLY IN MAP

CORRECTED REFERRING TO HEIGHT DATA

GROUND SURFACE

ORTHO-CHROMATIC IMAGE

CORRECTLY EXPRESSED ON ORTHOCHROMATIC IMAGE

EP 1 081 645 A1

# INTERNATIONAL SEARCH REPORT

| International application No. |
| --- |
| PCT/JP00/01776 |

**A. CLASSIFICATION OF SUBJECT MATTER**
Int.Cl⁷ G06T 1/00, G09B 29/00

According to International Patent Classification (IPC) or to both national classification and IPC

**B. FIELDS SEARCHED**

Minimum documentation searched (classification system followed by classification symbols)
Int.Cl⁷ G06T 1/00, G09B 29/00

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 10-149424, A (Mitsubishi Electric Corporation), 02 June, 1998 (02.06.98), Full text; all drawings (Family: none) | 1-9 |
| A | JP, 5-165402, A (Fujiretsukusu K.K.), 02 July, 1993 (02.07.93), Full text; all drawings (Family: none) | 1-9 |
| A | JP, 9-179967, A (Tokyo Gas K.K.), 11 July, 1997 (11.07.97), Full text; all drawings (Family: none) | 1-9 |
| EA | JP, 11-83478, A (Yasushi Hirosawa), 26 March, 1999 (26.03.99), Full text; all drawings & GB, 2330717, A | 1-9 |

☐ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 24 April, 2000 (24.04.00) | 27 June, 2000 (27.06.00) |

| Name and mailing address of the ISA/<br>Japanese Patent Office | Authorized officer |
| --- | --- |
| Facsimile No. | Telephone No. |

Form PCT/ISA/210 (second sheet) (July 1992)